Europäisches Patentamt

European Patent Office

Office européen des brevets

(19)

(11) Numéro de publication : **0 434 486 A1**

# DEMANDE DE BREVET EUROPEEN

(12)

(21) Numéro de dépôt : **90403383.4**

(22) Date de dépôt : **29.11.90**

(51) Int. Cl.⁵ : **B60V 1/22**

(30) Priorité : **15.12.89 FR 8916633**

(43) Date de publication de la demande :
**26.06.91 Bulletin 91/26**

(84) Etats contractants désignés :
**AT BE CH DE DK ES GB GR IT LI LU NL SE**

(71) Demandeur : **Cabrol, Lucien**
**9, Rue A. Benoît**
**F-13200 Arles (FR)**

(72) Inventeur : **Cabrol, Lucien**
**9, Rue A. Benoît**
**F-13200 Arles (FR)**

(74) Mandataire : **Bonnetat, Christian**
**CABINET BONNETAT 23, Rue de Léningrad**
**F-75008 Paris (FR)**

(54) **Appareil de transport de personnes ou de marchandises susceptible de se déplacer à la surface d'un plan d'eau.**

(57)   - La présente invention concerne un appareil de transport de personnes ou de marchandises susceptible de se déplacer à la surface d'un plan d'eau, comportant un corps (1) comprenant au moins une coque (2, 3) destinée à reposer au moins partiellement à la surface de l'eau et pourvu de moyens de propulsion (19).
   - Selon l'invention, l'appareil comprend des surfaces aérodynamiques (6, 7, 8, 9) s'étendant de part et d'autre de l'axe longitudinal (X, X) dudit corps (1) à la façon d'ailes d'aéronef, et des moyens susceptibles d'engendrer un coussin d'air (18) prévu au moins à la partie avant, dans le sens de déplacement de l'appareil, de ladite coque (2, 3).

EP 0 434 486 A1

FIG.1

# APPAREIL DE TRANSPORT DE PERSONNES OU DE MARCHANDISES SUSCEPTIBLE DE SE DEPLACER A LA SURFACE D'UN PLAN D'EAU

La présente invention concerne un appareil de transport de personnes ou de marchandises susceptible de se déplacer à la surface d'un plan d'eau, comportant un corps comprenant au moins une coque destinée à reposer au moins partiellement à la surface de l'eau et pourvu de moyens de propulsion.

L'invention s'applique, plus particulièrement quoique non exclusivement, à des bâteaux à moteur rapides, notamment ceux munis de moyens de propulsion aériens, du type hydroglisseur.

Les performances des bâteaux à moteur rapides ont été constamment améliorées au fil des ans, mais ceux-ci présentent tous en commun le fait que leur sécurité diminue au fur et à mesure que leur vitesse augmente. Cela est particulièrement vrai pour des bâteaux classiques dont les moyens de propulsion sont situés dans l'eau et créent un couple "cabreur", qui peut provoquer un retournement du bâteau lorsque celui-ci se déplace à grande vitesse.

Egalement, les engins du type hydroglisseur doivent faire appel à des structures et organes complexes et coûteux afin de pouvoir se déplacer, notamment à grande vitesse, dans des conditions difficiles dues à l'état de la surface du plan d'eau, lorsque la mer est agitée par exemple. En tout état de cause, ils ne peuvent naviguer que dans certaines limites d'agitation de la surface du plan d'eau.

La présente invention a pour but d'éviter ces inconvénients, et concerne un appareil du type indiqué ci-dessus, adapté pour naviguer en toute sécurité même à grande vitesse et sur un plan d'eau agité.

A cet effet, l'appareil de transport de personnes ou de marchandises susceptible de se déplacer à la surface d'un plan d'eau, comportant un corps comprenant au moins une coque destinée à reposer au moins partiellement à la surface de l'eau et pourvu de moyens de propulsion, est remarquable, selon l'invention, en ce qu'il comprend des surfaces aérodynamiques s'étendant de part et d'autre de l'axe longitudinal dudit corps à la façon d'ailes d'aéronef, et des moyens susceptibles d'engendrer un coussin d'air prévu au moins à la partie avant, dans le sens de déplacement de l'appareil, de ladite coque.

Ainsi, la combinaison selon l'invention de surfaces aérodynamiques et d'un coussin d'air à l'avant de l'appareil procure, notamment à grande vitesse, un effet de stabilisation, du fait que, lorsque la vitesse de déplacement augmente, une proportion de plus en plus importante du poids de l'appareil est transférée sur l'aérosustentation, l'appareil s'appuyant de plus sur le coussin d'air. Cette structure permet d'amortir le "coup de fouet" des vagues du fait même que le poids de l'appareil est pris en compte, dans une grande mesure (jusqu'à 2/3 de celui-ci), à des vitesses élevées par la voilure, et permet d'accroître le confort grâce à l'autostabilisation aérodynamique qui amortit les mouvements de tangage, tout en diminuant la traînée et donc les coûts énergétiques. En outre, le retournement devient impossible car le point de pivotement pendulaire ne sera plus au niveau de l'eau, mais près du centre aérien de sustentation de la voilure. En résumé, contrairement aux engins usuels, la sécurité de l'appareil selon l'invention croît au fur et à mesure que la vitesse augmente, tout en restant dans le domaine habituel du cahier des charges (hauteur et fréquence de houle données).

Avantageusement, lesdites surfaces aérodynamiques comprennent deux paires d'ailes disposées symétriquement par rapport à l'axe longitudinal dudit corps, les extrémités distales des ailes de chaque paire étant reliées l'une à l'autre, ou à au moins un élément de voilure prévu entre elles, de façon que chaque paire d'ailes forme, en vue de face, sensiblement un polygone fermé avec le côté correspondant du corps de l'appareil, et chaque paire d'ailes comportant une aile supérieure et une aile inférieure, la zone d'attache de cette dernière sur ledit corps étant décalée notamment vers l'arrière, dans le sens de déplacement de l'appareil, par rapport à la zone d'attache de l'aile supérieure. Cette conformation améliore encore la stabilité de l'appareil.

De préférence, les ailes inférieures et supérieures sont solidarisées sur ledit corps de manière articulée en rotation, chacune autour d'un axe parallèle à l'axe longitudinal dudit corps, et/ou les extrémités distales des ailes de chaque paire sont reliées de manière articulée en rotation autour d'axes parallèles à l'axe longitudinal dudit corps.

L'appareil est, avantageusement, du type catamaran comportant au moins deux coques reliées ensemble par un bâti, en étant remarquable par une jupe, délimitant ledit coussin d'air, prévue dans le canal existant entre les deuxdites coques.

En particulier, ladite jupe peut s'étendre sur au moins sensiblement toute la longueur dudit canal.

Selon une autre caractéristique de l'invention, l'appareil comprend des moyens formant vérin destinés à agir au niveau de l'articulation des ailes supérieures de façon à replier les deux paires d'ailes l'une vers l'autre. Cela permet de réduire l'encombrement de l'appareil dans les ports.

Selon encore une autre caractéristique de l'invention, lesdits moyens de propulsion sont des moyens de propulsion aériens, notamment une turbine. L'appareil peut donc présenter un très faible tirant d'eau, en accroissant ainsi notablement la sécurité, car il n'y aura jamais d'interférence des hélices avec des corps flottants (filets, épaves, etc...).

En outre, l'appareil peut être muni d'une gouverne de profondeur et/ou d'une gouverne de direction.

Egalement, l'appareil peut comprendre au moins deux structures aérodynamiques, longitudinalement espacées, constituées, chacune, de deuxdites paires d'ailes. Dans ce cas, on peut prévoir au moins deux groupes de propulsion aériens, notamment deux turbines.

Les figures du dessin annexé feront bien comprendre comment l'invention peut être réalisée.

La figure 1 est une vue de dessus schématique d'un exemple de réalisation d'un appareil selon l'invention.

La figure 2 est une vue de côté de l'appareil de la figure 1.

La figure 3 est une vue de face de l'appareil de la figure 1.

Les figures 4 et 5 montrent, respectivement en vue de dessus et en vue de côté, une variante de réalisation de l'appareil selon l'invention.

L'appareil selon l'invention, conformément à l'exemple de réalisation montré, présente un corps 1 ayant une structure de catamaran dont les deux coques 2, 3 sont reliées ensemble par un bâti 4, dont la forme est quelque peu analogue à celle d'une carrosserie d'automobile et qui comprend notamment un poste de pilotage 5.

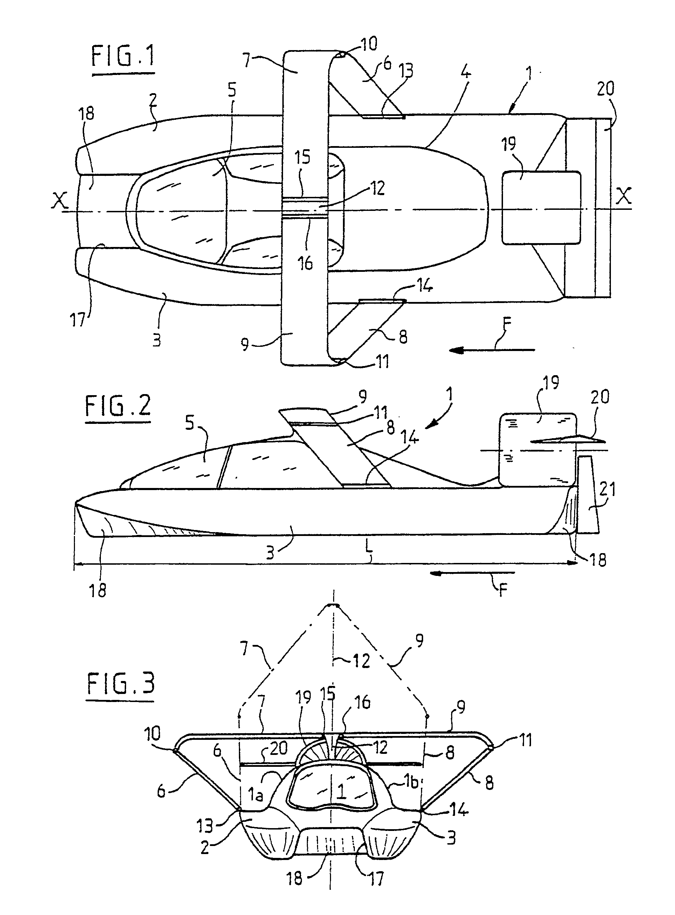

De chaque côté du corps 1 de l'appareil, sont disposées deux ailes 6, 7 et 8, 9, symétriquement par rapport à l'axe longitudinal X, X du corps 1, lesdites ailes s'étendant au-delà des coques 2, 3, comme le font les ailes d'un aéronef de part et d'autre de son fuselage. Les extrémités distales des ailes 6, 7 et 8, 9 de chaque paire sont reliées l'une à l'autre de manière articulée en rotation autour d'axes 10, 11 parallèles à l'axe longitudinal X, X du corps 1, de façon que chaque paire 6, 7 et 8, 9 d'ailes forme, en vue de face (figure 3), sensiblement un polygone fermé avec le côté correspondant 1a, 1b du corps 1 de l'appareil. Chaque paire d'ailes comporte une aile supérieure 7, 9 et une aile inférieure 6, 8, la zone d'attache de cette dernière 6, 8 sur le corps 1 (en fait la coque 2, 3) étant décalée vers l'arrière, dans le sens de déplacement (flèche F) de l'appareil, par rapport à la zone d'attache de l'aile supérieure 7, 9, c'est-à-dire le mât 12, les ailes inférieures 6, 8 et supérieures 7, 9 étant solidarisées, respectivement, aux coques 2, 3 et au mât 12 de manière articulée en rotation, chacune autour d'un axe, désigné respectivement par les références numériques 13, 14, 15 et 16, parallèle à l'axe longitudinal X, X du corps 1.

Par ailleurs, dans le canal 17 existant entre les deux coques 2 et 3, on prévoit au moins à la partie avant de l'appareil une jupe 18 délimitant un coussin d'air engendré par des moyens appropriés (non représentés), sur lequel, en marche, l'appareil prendra appui. La jupe peut également s'étendre sur sensiblement toute la longueur du canal 17, c'est-à-dire sur sensiblement toute la longueur L des coques 2, 3 de l'appareil (figure 2).

Comme cela est schématisé en traits mixtes sur la figure 3, le mât 12 peut être réalisé sous forme d'un vérin pouvant agir au niveau de l'articulation des ailes supérieures 7, 9 de façon à replier les deux paires 6, 7 et 8, 9 d'ailes l'une vers l'autre, ce qui permet de diminuer l'encombrement de l'appareil dans un port.

L'appareil est de plus muni, à l'arrière de celui-ci, de moyens de propulsion aériens, comme une turbine 19, associés à un empennage comportant une gouverne de profondeur 20 et une gouverne de direction 21.

L'appareil de l'invention peut ainsi présenter plusieurs régimes de fonctionnement :

(a) à faible vitesse : hydrosustentation par contact de la coque (ou des coques) avec l'eau avec ou sans aérosustentation par le coussin d'air (tirant d'eau réglable) ;

(b) à vitesse moyenne : à (a), s'ajoutent l'aérosustentation et l'aérostabilisation (tangage, roulis) des ailes en combinaison avec l'effet "canard" du coussin d'air ;

(c) à grande vitesse : l'effet de portance des ailes est de plus en plus accentué, en assurant la majorité à la fois de l'aérosustentation et de l'aérostabilisation ; le coussin d'air avant par sa pression, sa déformabilité et son autoamortissement, donnant la "hauteur de vol" par appui et effet "canard", éventuellement sans contact de la coque avec l'eau, selon la hauteur de la jupe délimitant ledit coussin d'air.

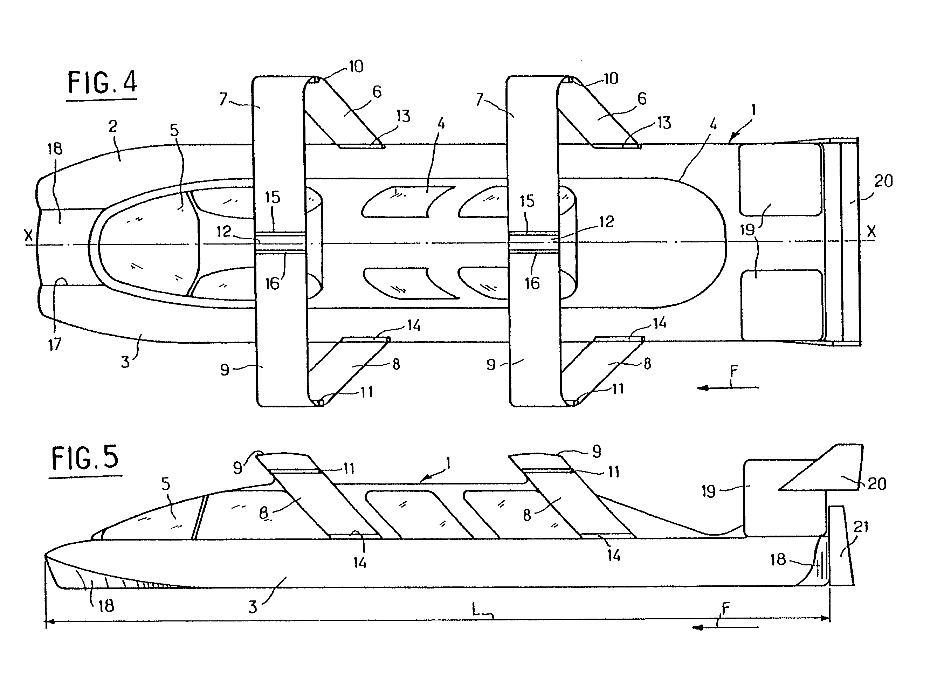

En se référant aux figures 4 et 5, une variante de réalisation de l'appareil selon l'invention comprend deux structures aérodynamiques, longitudinalement espacées, constituées, chacune, de deux paires d'ailes 6, 7 et 8, 9, comme celles décrites ci-dessus. Les moyens de propulsion peuvent être constitués, dans ce cas, de deux turbines 19. Une telle réalisation est utile pour des appareils plus longs et plus lourds que dans l'exemple de réalisation des figures 1 à 3, en permettant d'obtenir un couple de stabilisation beaucoup plus grand. En tout état de cause, deux ou plus telles structures sont plus favorables, notamment du point de vue de la stabilité, qu'une structure unique de plus grande dimension, tout en conservant le même encombrement que dans le cas des figures 1 à 3. Par ailleurs, des modules standard peuvent être utilisés pour réaliser de telles structures multiples.

## Revendications

1. Appareil de transport de personnes ou de marchandises susceptible de se déplacer à la surface d'un plan d'eau, comportant un corps comprenant au moins une coque destinée à reposer au moins partiellement à la surface de l'eau et pourvu de moyens de propulsion, caractérisé en ce qu'il comprend des surfaces aérodynamiques (6, 7, 8, 9) s'étendant de part et d'autre de l'axe longitudinal (X, X) dudit corps (1) à la façon d'ailes d'aéronef, et des moyens susceptibles d'engendrer un coussin d'air (18) prévu au moins à la partie avant, dans le sens de déplacement de l'appareil, de ladite coque (2, 3).

2. Appareil selon la revendication 1, caractérisé en ce que lesdites surfaces aérodynamiques comprennent deux paires (6, 7) et (8, 9) d'ailes disposées symétriquement par rapport à l'axe longitudinal (X, X) dudit corps (1), les extrémités distales des ailes de chaque paire étant reliées l'une à l'autre, ou à au moins un élément de voilure prévu entre elles, de façon que chaque paire (6, 7) et (8, 9) d'ailes forme, en vue de face, sensiblement un polygone fermé avec le côté correspondant (1a, 1b) du corps (1) de l'appareil, et chaque paire d'ailes comportant une aile supérieure (7, 9) et une aile inférieure (6, 8), la zone d'attache de cette dernière (6, 8) sur ledit corps (1) étant décalée notamment vers l'arrière, dans le sens de déplacement de l'appareil, par rapport à la zone d'attache de l'aile supérieure (7, 9).

3. Appareil selon la revendication 2, caractérisé en ce que les ailes inférieures (6, 8) et supérieures (7, 9) sont solidarisées sur ledit corps (1) de manière articulée en rotation, chacune, autour d'un axe (13, 14, 15, 16) parallèle à l'axe longitudinal (X, X) dudit corps (1).

4. Appareil selon la revendication 2 ou la revendication 3, caractérisé en ce que les extrémités distales des ailes de chaque paire (6, 7) et (8, 9) sont reliées de manière articulée en rotation autour d'axes (10, 11) parallèles à l'axe longitudinal (X, X) dudit corps (1).

5. Appareil selon l'une quelconque des revendications 1 à 4, du type catamaran comportant au moins deux coques reliées ensemble par un bâti, caractérisé par une jupe (18), délimitant ledit coussin d'air, prévue dans le canal (17) existant entre les deuxdites coques (2, 3).

6. Appareil selon la revendication 5, caractérisé en ce que ladite jupe (18) s'étend sur au moins sensiblement toute la longueur (L) dudit canal (17).

7. Appareil selon l'une quelconque des revendications 4 à 6, caractérisé par des moyens formant vérin (12) destinés à agir au niveau de l'articulation des ailes supérieures (7, 9) de façon à replier les deux paires d'ailes l'une vers l'autre.

8. Appareil selon l'une quelconque des revendications 1 à 7, caractérisé en ce que lesdits moyens de propulsion sont des moyens de propulsion aériens, notamment une turbine (19).

9. Appareil selon l'une quelconque des revendications 1 à 8, caractérisé en ce qu'il comprend une gouverne de profondeur (20).

10. Appareil selon l'une quelconque des revendications 1 à 9, caractérisé en ce qu'il comprend une gouverne de direction (21).

11. Appareil selon l'une quelconque des revendications 2 à 10, caractérisé en ce qu'il comprend au moins deux structures aérodynamiques, longitudinalement espacées, constituées, chacune, de deuxdites paires d'ailes (6, 7) et (8, 9).

12. Appareil selon la revendication 11, caractérisé en ce qu'il comprend au moins deux groupes de propulsion aériens, notamment deux turbines (19).

FIG.1

FIG.2

FIG.3

EP 0 434 486 A1

FIG. 4

FIG. 5

Office européen
des brevets

**RAPPORT DE RECHERCHE EUROPEENNE**

Numero de la demande

EP 90 40 3383

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 151 893 (MANTLE)<br>* Colonne 1, lignes 5-15; colonne 4, lignes 9-65; colonne 5, ligne 51 - colonne 6, ligne 50 * | 1,12 | B 60 V 1/22 |
| X | FR-A-2 546 474 (CABROL)<br>* Brevet entier * | 2,3,4,<br>11 | |
| X | US-A-3 481 297 (MANTLE)<br>* Colonne 2, ligne 61 - colonne 3, ligne 17 * | 5,6,8,9<br>,10 | |
| A | FR-A-2 180 077 (MALVESTUTO)<br>* Brevet entier * | 1 | |
| A | US-A-3 231 038 (WEILAND)<br>* Brevet entier * | 1 | |
| A | DE-A-3 612 911 (SCHULTZ)<br>* Brevet entier * | 1,2 | |
| A | DE-A-3 636 046 (SCHULTZ)<br>* Brevet entier * | 1,2 | **DOMAINES TECHNIQUES RECHERCHES (Int. Cl.5)**<br><br>B 60 V |

Le présent rapport a été établi pour toutes les revendications

| Lieu de la recherche | Date d'achèvement de la recherche | Examinateur |
|---|---|---|
| LA HAYE | 25-03-1991 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)